# EUROPEAN PATENT SPECIFICATION

(11) **EP 2 869 458 B1**
(45) Date of publication and mention of the grant of the patent: **20.12.2017**
(21) Application number: 13190913.7
(22) Date of filing: 30.10.2013
(51) Int. Cl.: H02P 9/10

(54) **Current controller of a wind turbine**
Stromsteuerung einer Windturbine
Régulateur de courant d'une éolienne

(43) Date of publication of application: 06.05.2015
(73) Proprietor: Siemens Aktiengesellschaft, 80333 München (DE)
(72) Inventor: Deng, Heng, 7330 Brande (DK)

(56) References cited:
- EP-A1- 2 485 388
- EP-A1- 2 552 012
- EP-A1- 2 552 013
- EP-A2- 2 043 255
- US-B2- 7 982 326

## Description

### FIELD OF THE INVENTION

The present invention relates to a wind turbine, wherein the wind turbine comprises an electric generator, a frequency converter and a generator-side converter controller. More specifically, the invention relates to a current controller, which is a part of the generator-side converter controller.

### BACKGROUND OF THE INVENTION

Acoustic noise and vibration of an electric generator of a wind turbine is a great challenge, especially with direct drive generators. In permanent magnet machines, for instance, the acoustic noise and the vibration may be excited by air-gap torque ripple and radial force pressure ripple.

One approach to reduce acoustic noise and vibration is to design the electric generator appropriately, i.e. such that harmonics in both air-gap torque and radial force pressure are reduced. For example, torque ripple can be greatly reduced by using proper shaping of the magnets. However, it is difficult to minimize both torque ripple and radial force pressure ripple by using a single design. Moreover, the performance of the electric generator is limited using this approach.

Another approach to reduce acoustic noise and vibration is to design mechanical parts of the generator such that all resonance frequencies, or at least the most relevant ones, are out of the range that can be excited by the torque and the radial force pressure. However, due to the variable speed of the generator, the frequency range that can be excited by torque ripple and radial force pressure ripple typically is very wide. Thus, it is difficult to avoid resonance frequencies in the whole frequency range due to size and cost limit of the electric generator.

Acoustic noise and vibration can also be reduced by using a control method which minimizes the excitation source, namely the torque ripple and radial force pressure ripple. For instance, a frequency converter can inject harmonic currents to the stator of the electric generator so that both torque ripple and radial force pressure ripple can be minimized. This approach has the advantage that only little additional cost will be needed. Moreover, there is no need to change available hardware design. Furthermore, since the harmonic current needed is not high, additional generator loss is small and negligible.

In the US Patent 7,982,326 B2, a method to perform close-loop regulation of a generator harmonic current for reducing noise and vibration is presented. The method is mainly based on using positive-sequence and negative-sequence regulators for regulating a harmonic current error in dq frame and for controlling the harmonic currents. However, this method is relatively complex, as for example regulation has to be carried out for both positive-sequence and negative-sequence components. Additionally, a plurality of input signals, such as fundamental current commands, are needed for the harmonic current controller.

Different solutions for reducing acoustic noise and vibration have been disclosed in the European Patent Applications EP 2 043 255 A2, EP 2 485 388 A1, EP 2 552 012 A1 and EP 2 552 013 A1.

The objective of this invention is to provide a wind turbine with yet another, alternative current controller.

### SUMMARY OF THE INVENTION

This objective is achieved by the independent claims. The dependent claims describe advantageous developments and modifications of the invention.

In accordance with the invention there is provided a wind turbine, which comprises an electric generator, a frequency converter and a generator-side converter controller. The fre quency converter is configured to interface electric power, which is generated by the wind turbine, between the electric generator and an external power grid. Furthermore, the frequency converter comprises a generator-side converter unit, which is coupled to the electric generator, a grid-side converter unit, which is coupled to the external power grid, and a direct current link, which connects the generator-side converter unit with the grid-side converter unit. The generator-side converter controller is coupled to the generator-side converter unit and is configured to supply converter control signals to the generator-side converter unit in order to reduce acoustic noise, which is generated by the electric generator. The generator-side converter controller comprises a current controller. The current controller comprises a fundamental current controller configured for providing fundamental voltage commands; at least one harmonic current reference calculation unit for calculating at least one harmonic current reference for reducing noise and vibration of the electric generator; at least one harmonic current controller configured for using the harmonic current reference and feedback generator current signals from the electric generator to obtain harmonic voltage commands; and summation elements configured for adding the fundamental voltage commands and the harmonic voltage commands to obtain the converter control signals. Finally, the current controller is configured such that a harmonic current error, which is defined by the difference between the feedback generator current signals and the harmonic current reference, is minimized. Furthermore, the harmonic current error is determined in a stationary alpha-beta frame.

Thus, the present invention relates to a method for controlling the harmonic current of the wind turbine such that acoustic noise and vibration of the electric generator can be reduced. Specifically, the frequency converter injects harmonic currents to the electric generator such that both torque ripple and radial force pressure ripple can be minimized.

A wind turbine or a wind power plant is a device that converts kinetic energy from the wind into electrical energy. Typically, the wind turbine comprises a set of wind turbine rotor blades, which are connected to a rotor of the wind turbine by a hub. The rotor rotates about an axis of rotation and is able, in conjunction with a stator, to generate electricity. Depending on the rotational speed of the rotor, an electric current with a varying frequency is generated by the electric generator. The frequency converter is able to convert the frequency of the electric current into another predetermined frequency, which is e.g. advantageous for feeding the electric current into the external power grid.

In the context of this patent application, the notion "electric current" refers to a flow of electric charge. The electric current is characterized by a current intensity and a voltage. It can furthermore be characterized by a frequency and a current direction, e.g. if the electric current is an alternating current.

Furthermore, in the context of this application, the feedback generator current signal, which relates to the electric current of the generator, is also simply referred to as a "generator current signal" or as a "generator current". In the context of this application, these three expressions are used interchangeably.

Furthermore, in the context of this application, the electric generator is also simply referred to as a "generator".

In more detail, in a first part of the frequency converter, namely in the generator-side converter unit of the frequency converter, the alternating current from the electric generator is converted into a direct current. Subsequently, the direct current is transferred via the direct current link to a second part of the frequency converter, the grid-side converter unit. In the grid-side converter unit the direct current coming from the direct current link is converted back into an alternating current. However, a first frequency of the electric current at the generator-side converter unit may be different to a second frequency of the electric current of the grid-side converter unit.

The current controller of the generator-side converter controller is advantageously coupled to a current reference calculation unit. The current reference calculation unit may be configured to supply a fundamental current reference in a synchronous, rotating dq frame. The input to the current reference calculation unit may be a power-torque reference and/or a generator voltage and/or a direct current link voltage and/or power torque. The current reference is advantageously calculated based on a generator voltage controller and/or maximum torque per ampere requirements, depending on application requirements.

The current controller, in particular the fundamental current controller, is advantageously a closed-loop feedback regulation of the generator current in a dq-rotating frame. For a better dynamic performance and decouplingf, voltage feedforward may also be used in the current controller. In particular, voltage feedforward may be used in the fundamental current controller.

The harmonic current controller, which is conceptually separated from the fundamental current controller, is configured for using a harmonic current reference and feedback generator current signals from the electric generator to obtain harmonic voltage commands.

The harmonic current reference is thereby calculated by the harmonic current reference calculation unit. In other words, the harmonic current reference is a specific harmonic which is supposed to best fit for reducing the acoustic noise.

Subsequently, the harmonic current reference is compared to the actual feedback generator current signal. Thus, the harmonic current reference is the optimal current for reducing acoustic noise and vibration of the electric generator. The harmonic current reference can be determined by offline test or by simulation. The values achieved from the offline test could be saved in a look-up table and used in real-time control. The index of the look-up table can be generator torque, current, and/or power. Furthermore, turbine power and power reference could also be used as the index of the look-up table.

Subsequently, by means of the summation elements, the fundamental voltage commands and the harmonic voltage commands are added in order to obtain the converter control signals.

Compared to the state of the art, the regulation principle is relatively simple. Specifically, no fundamental current commands are used in the harmonic current controller or the harmonic current reference calculation unit. This is one of the advantages and differences of the proposed method compared to the state of the art.

Note that the harmonic current error is determined in a stationary alpha-beta frame.

Compared to the state of the art, where the harmonic current error is determined in a dq rotating frame, this has the advantage that a separate regulation of positive-sequence components and negative-sequence components is not necessary. This in turn simplifies the regulation mechanism. In other words, by using a stationary alpha-beta frame, the frequencies of the positive-sequence and negative-sequence harmonics are different. Thus, harmonics can directly be controlled at different frequencies.

In another advantageous embodiment, the current controller comprises a first harmonic current controller and at least a second harmonic current controller.

Advantageously, the number of harmonic current controllers depends on the noise and current frequencies of the electric generator. If, for instance, three frequencies exist for which the electric generator exhibits a high noise level, three harmonic current controllers are advantageously be used.

In another advantageous embodiment, the first harmonic current controller uses a frequency which is six times a frequency of the fundamental current controller and/or the second harmonic current controller uses a frequency which is twelve times the frequency of the fundamental current controller.

The frequency of the fundamental current controller is also referred to as the fundamental frequency f. Thus, in the described advantageous embodiment the first harmonic current controller uses a frequency which is equivalent to 6 * f. Likewise, the second harmonic current controller uses a frequency which is equivalent to 12 * f.

In another advantageous embodiment, the harmonic current controller comprises a plurality of filters for filtering the harmonic current error.

The filters may be used at different stages, or different steps, within the harmonic current controller. They may, for instance, be used right at the beginning, where the harmonic current errors are fed into the harmonic current controller. Alternatively, filters may also be used after the harmonic current errors have experienced a frame transform.

In another advantageous embodiment, the harmonic current controller comprises regulators.

Similar to the filters, also the regulations by the regulators can take place at different stages within the harmonic current controller. As one alternative, the harmonic current errors may first be transformed by the frame transform and subsequently filtered before entering the regulators. As another alternative, the harmonic current errors may first be filtered and subsequently transformed in the frame transform before entering the regulators.

A regulator may be a proportional integral controller, which is also referred to as a PI controller.

In another advantageous embodiment, the input signals for the harmonic current reference calculation unit comprise generator torque and/or generator speed and/or generator current signals and/or generator power and/or wind turbine power.

In another advantageous embodiment, the grid-side converter unit is configured for being connected with a transformer.

The transformer is arranged and prepared to transform the voltage of the alternating current from a first voltage level to a second voltage level. The second voltage level is chosen such that it is advantageous for the external power grid.

In another advantageous embodiment, the frequency converter comprises a plurality of insulated gate bipolar transistors.

### BRIEF DESCRIPTION OF THE DRAWINGS

Embodiments of the invention are now described, by way of example only, with reference to the accompanying drawings, of which:
- Figure 1: shows a wind turbine comprising an electric generator, a frequency converter and a generator-side converter controller;
- Figure 2: shows a harmonic current controller of the frequency converter;
- Figure 3: shows a first embodiment of the harmonic current controller;
- Figure 4: shows a second embodiment of the harmonic current controller; and
- Figure 5: shows a third embodiment of the harmonic current controller.

The illustration in the drawings is schematically. It should furthermore be noted that numerals which refer to similar features or elements are referred to with the same numeral throughout the drawings.

### DESCRIPTION OF THE DRAWINGS

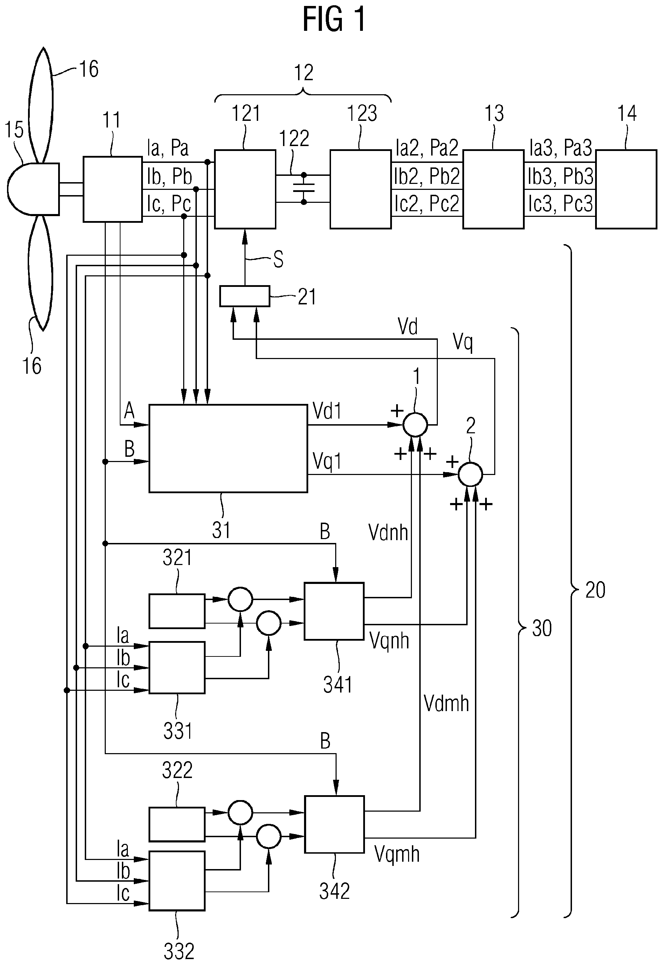

In Figure 1, a diagram of a wind turbine is shown. The wind turbine comprises a hub 15, where a number of wind turbine rotor blades 16 are attached to. In the example shown in Figure 1, the wind turbine comprises two wind turbine rotor blades 16. Likewise, only one wind turbine rotor blade or three wind turbine rotor blades or even more than three wind turbine rotor blades are possible as well. The hub 15 with the wind turbine rotor blades 16 is rotatably mounted about an axis of rotation. The rotational movement of the hub 15 with the wind turbine rotor blades 16 is transferred to an electric generator 11. The electric generator 11 comprises a rotor, which may directly be the rotor coming from the hub 15, and a stator. The rotational movement from the hub 15 is converted into electric power by the electric generator 11. Advantageously, the electric generator 11 comprises permanent magnets. In particular, the electric generator 11 is a brushless permanent magnet generator.

The wind turbine shown in Figure 1 is a gearless variable speed wind turbine, which is also referred to as a direct drive wind turbine. Alternatively, a gearbox may be located between the rotor 15 and the electric generator 11. The electric generator 11 generates electric power, which is referred to as a power signal Pa, Pb, Pc. More specifically, it generates an alternating current which is referred to as a generator current Ia, Ib, Ic in Figure 1. The power signal Pa, Pb, Pc is characterized by a first frequency. The first frequency may vary depending on a varying rotational speed of the electric generator 11. The rotational speed of the electric generator 11 is also referred to as generator speed A.

In order to modify and control the frequency of the power signal Pa, Pb, Pc, the wind turbine comprises a frequency converter 12. The frequency converter 12 has as an input the power signal Pa, Pb, Pc and gives as an output a modified power signal Pa2, Pb2, Pc2. The modified power signal Pa2, Pb2, Pc2 is characterized by a second frequency, which in general differs from the first frequency. More specifically, the output of the frequency converter 12 is a generator current Ia2, Ib2, Ic2.

The frequency converter 12 comprises a generator-side converter unit 121 and a grid-side converter unit 123, both being connected by a direct current link 122. Specifically, the generator-side converter unit 121 converts the alternating current coming from the electric generator 11 into a direct current. The direct current from the generator-side converter unit 121 is subsequently transferred via the direct current link 122 to the grid-side converter unit 123. The direct current link 122 may be configured as a direct current link capacitor, in particular as a plurality of direct current link capacitors.

Subsequently, the direct current of the grid-side converter unit 123 is transformed into an alternating current. This alternating current, in other words the modified generator current Ia2, Ib2, Ic2, or the modified power signal Pa2, Pb2, Pc2, is subsequently transformed by a transformer 13 into a further modified power signal Pa3, Pb3, Pc3 with a further modified generator current Ia3, Ib3, Ic3. While the electric power which is the input of the transformer 13 is characterized by a first voltage, the electric power being given by the transformer 13 as an output is characterized by a second voltage. In general, the first voltage defers from the second voltage. In summary, the initial power signal Pa, Pb, Pc, which is generated by the electric generator 11, may be modified by the frequency converter 12 and the transformer 13 with respect to its frequency and its voltage such that it suits best the needs of the external power grid 14.

The wind turbine furthermore comprises a generator-side converter controller 20 which is coupled to the generator-side converter unit 121 and controls the generator-side converter unit 121. One part of the generator-side converter controller 20 is a current controller 30. One purpose of the current controller 30 is to control and modify, if necessary, the generator current Ia, Ib, Ic such that e.g. acoustic noise and vibration of the electric generator 11 is reduced. It has to be noted that the current controller 30 comprises computer program code, i.e. software.

The frequency converter 12 on the one hand receives converter control signals S for controlling power switches. On the other hand, the frequency converter 12 also switches puls-width modulated signals to the generator 11 in order to regulate the generator current Ia, Ib, Ic. The generator-side converter controller 20 receives feedback generator current signals Ia, Ib, Ic and other input signals and calculates or creates the converter control signals S as an output signal.

In the following, the generator-side converter controller 20 and in particular the current controller 30 will be described in more detail.

Firstly, the current controller 30 comprises a fundamental current controller 31. The fundamental current controller 31 uses as input signals the feedback generator current signals Ia, Ib, Ic, the generator speed A and an electrical angle B of the electric generator 11. The fundamental current controller 31 gives as output signals fundamental voltage signals Vd1, Vq1. Advantageously, the fundamental current controller 31 comprises frame transforms, filters, regulators and a voltage feedforward mechanism. A fundamental current controller as such is known in the state of the art and will thus not be described in detail in this patent application.

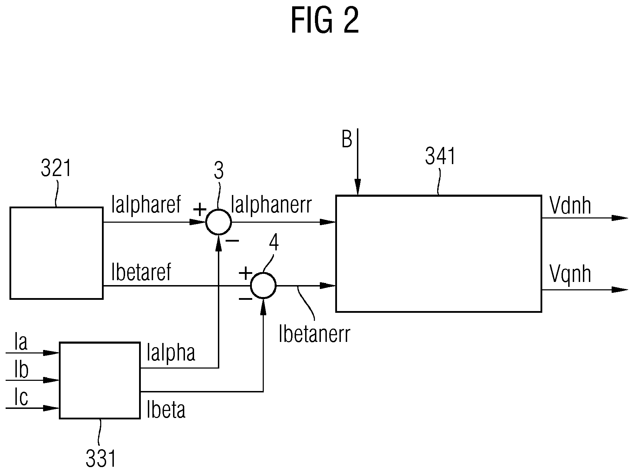

Secondly, the current controller 30 comprises at least one unit for calculating a harmonic current reference and at least one harmonic current controller. In the embodiment shown in Figure 1, the current controller 30 comprises a first harmonic current reference calculation unit 321 and a second harmonic current reference calculation unit 322. The harmonic current reference calculation units 321, 322 are configured for calculating the harmonic current references for reducing noise and vibration of the electric generator 11. This is described in more detail in Figure 2. The output signals of the harmonic current reference calculation units 321, 322 are compared to the feedback generator current signals Ia, Ib, Ic and are subsequently used as input signals for the first harmonic current controller 341 and the second harmonic current controller 342, respectively. Together with a further input signal, namely the electrical angle B of the electric generator 11, the harmonic current controllers 341, 342 are used for determining harmonic voltage commands Vdnh, Vqnh, Vdmh, Vqmh. Subsequently, the harmonic voltage commands Vdnh, Vdmh are added to the fundamental voltage signal Vd1 by a first summation element 1 in order to obtain a voltage signal Vd which is fed into a modulator 21. Likewise, the harmonic voltage commands Vqnh, Vqmh are added to the fundamental voltage signal Vq1 by a second summation element 2 in order to obtain a voltage command Vq, which is subsequently fed into the modulator 21.

The modulator 21 advantageously comprises a frame transform, which transforms the voltage commands Vd, Vq from the dq frame into the abc frame. Finally, converter control signals S are obtained and sent to the generator-side converter unit 121.

It has to be noted that in Figure 1 two harmonic currents are calculated and used to control and regulate the generator-side converter unit 121. These two harmonic currents are also referred to as the nth harmonic current and mth harmonic current. In alternative embodiments it may well be advantageous to include either only one harmonic current controller or more than two harmonic current controllers.

In Figure 2, the first harmonic current controller 341, the first harmonic current reference calculation unit 321 and a first frame transform 331 and their respective relation with each other are shown in more detail. The first harmonic current reference calculation unit 321 calculates, i.e. determines, harmonic current reference signals Ialphanref, Ibetanref. The harmonic current reference signals Ialphanref, Ibetanref are supposed to best fit for reducing the acoustic noise and vibration of the electric generator 11. The harmonic current reference signals Ialphanref, Ibetanref are calculated based on input signals such as generator torque, generator speed A, generator current signals Ia, Ib, Ic and/or generator power. The harmonic current reference signals Ialphanref, Ibetanref can be determined by offline test or simulations. The values achieved from the offline test could be saved in a look-up table and used in realtime control. The index of the look-up table has been mentioned above as input signals of the first harmonic current reference calculation unit 321. Alternatively, wind turbine power and/or wind turbine power reference could also be used as input signals for the first harmonic current reference calculation unit 321. Finally note that the harmonic current reference signals Ialphanref, Ibetanref are given in a stationary alpha-beta frame.

Therefore, the feedback generator current signals Ia, Ib, Ic to which the harmonic current reference signals Ialphanref, Ibetanref are compared with has to be transformed into the stationary alpha-beta frame as well. This is performed, or achieved, by the first frame transform 331.

By means of a third summation element 3 and a fourth summation element 4 the harmonic current reference signals Ialphanref, Ibetanref are compared, i.e. subtracted, from the feedback generator current signals Ialpha, Ibeta. Thus, as a result from the subtraction, a harmonic current error Ialphanerr, Ibetanerr is obtained. This harmonic current error Ialphanerr, Ibetanerr is then used as input signals for the first harmonic current controller 341. Together with the electrical angle B of the electric generator 11 harmonic voltage commands Vdnh, Vqnh are calculated by the first harmonic current controller 341.

It has to be noted that a key point of the present invention is that the comparison of the harmonic current reference signals Ialphanref, Ibetanref with the feedback generator current signals Ialpha, Ibeta, in other words the determination of the harmonic current error Ialphanerr, Ibetanerr, is carried out in a stationary alpha-beta frame. In the state of the art this determination of the harmonic current error Ialphanerr, Ibetanerr is typically performed in a rotating dq frame. In practice, this transformation is advantageously carried out by Clarke transformation.

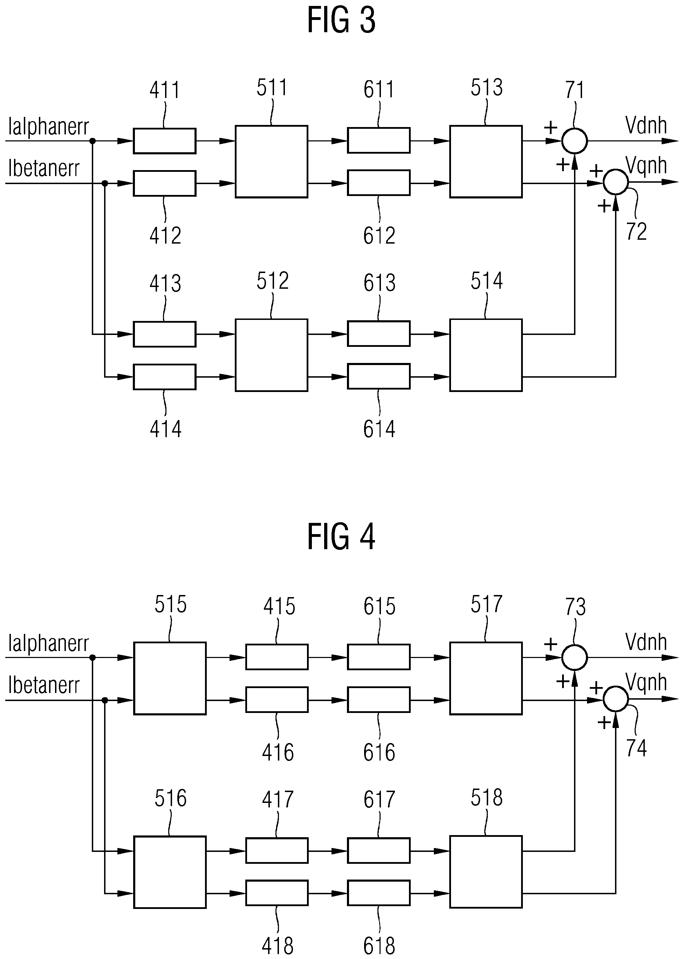

In Figures 3 to 5, advantageous embodiments of the harmonic current controller 341 are shown. In Figure 3, the harmonic current error Ialphanerr, Ibetanerr is firstly filtered by four filters 411, 412, 413 and 414. Subsequently, the filtered harmonic current errors Ialphanerr, Ibetanerr are converted from the alpha-beta frame into a rotating (-n+1) frame and a (n+1) frame, respectively. More specifically, the frame transform 511 describes a conversion by (-n+1) times the electrical angle B and the frame transform 512 describes a conversion by (n+1) times the electrical angle B. Subsequently, the filtered and transformed harmonic current errors Ialphanerr, Ibetanerr are regulated by a set of regulators, specifically four regulators 611, 612, 613 and 614. Finally a transformation back into the dq frame is transformed by means of frame transforms 513, 514. These output signals are added by summation elements 71, 72 and thus the harmonic voltage commands Vdnh, Vqnh are obtained.

Note that by the first and second filter 411, 412 harmonic components except the (n-1) harmonic component are attenuated. Likewise for the third and fourth filter 413, 414, the harmonic components except (n+1) component are attenuated. Also note that for the regulators 611, 612, 613 and 614 proportional integral controllers PI controller can be used.

In Figure 4, a second embodiment of a harmonic current controller 341 is shown. In this embodiment, the harmonic current error Ialphanerr, Ibetanerr is first transformed by frame transforms 515, 516 from the alpha-beta frame into a rotating frame. Subsequently, four filters 415, 416, 417 and 418 are used to filter the harmonic current errors Ialphanerr, Ibetanerr before regulation in regulators 615, 616, 617 and 618 is performed. Finally, a transformation back into the dq frame is performed by frame transforms 517, 518. A third harmonic current controller summation element 73 and a fourth harmonic current controller summation element 74 are used to determine the actual harmonic voltage command Vdnh, Vqnh which is used and needed for determining the converter control signals S. Exemplarily and similar to Figure 4, the regulation of the harmonic current error Ialphanerr, Ibetanerr may take place in a rotating (-n+1) times the electrical angle B frame and in a rotating (n+1) times the electrical angle B frame may take place. Note that for regulation also low-pass filters (not shown in Figure 4) may be used.

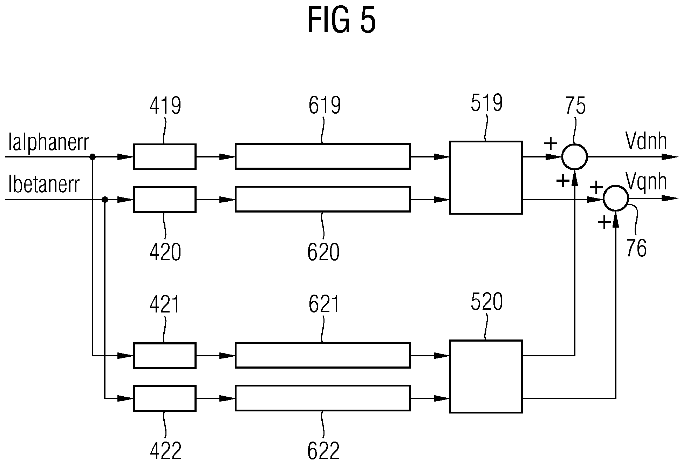

Figure 5 shows a third embodiment of an advantageous harmonic current controller 341. After being filtered by the filters 419, 420, 421 and 422 the harmonic current error Ialphanerr, Ibetanerr is regulated in resonant regulators 619, 620, 621 and 622. It may be advantageous to use other types of regulators other than proportional integral controller. After regulation the harmonic current error Ialphanerr, Ibetanerr is transformed back into the dq frame by frame transforms 519, 520. Finally, by means of a fifth harmonic current controller summation element 75 and a sixth harmonic current controller summation element 76 the harmonic voltage commands Vdnh, Vqnh are obtained.

## Claims

1. Wind turbine comprising an electric generator (11), a frequency converter (12) and a generator-side converter controller (20),
- wherein the frequency converter (12) is configured to interface electric power, which is generated by the wind turbine, between the electric generator (11) and an external power grid (14),
- wherein the frequency converter (12) comprises a generator-side converter unit (121), which is coupled to the electric generator (11), a grid-side converter unit (123), which is coupled to the external power grid (14), and a direct current link (122), which connects the generator-side converter unit (121) with the grid-side converter unit (123),
- wherein the generator-side converter controller (20) is coupled to the generator-side converter unit (121),
- wherein the generator-side converter controller (20) is configured to supply converter control signals (S) to the generator-side converter unit (121) to reduce acoustic noise, which is generated by the electric generator (11),
- wherein the generator-side converter controller (20) comprises a current controller (30),
- wherein the current controller (30) comprises
a) a fundamental current controller (31) configured for providing fundamental voltage commands (Vd1, Vql),
b) at least one harmonic current reference calculation unit (321) for calculating at least one harmonic current reference (Ialphanref, Ibetanref) for reducing noise and vibration of the electric generator (11),
c) at least one harmonic current controller (341) configured for using the harmonic current reference (Ialphanref, Ibetanref) and feedback generator current signals (Ia, Ib, Ic) from the electric generator (11) to obtain harmonic voltage commands (Vdnh, Vqnh), and
d) summation elements (1, 2) configured for adding the fundamental voltage commands (Vd1, Vq1) and the harmonic voltage commands (Vdnh, Vqnh) to obtain the converter control signals (S), and
- wherein the current controller (30) is configured such that a harmonic current error (Ialphanerr, Ibetanerr), which is defined by the difference between the feedback generator current signals (Ialpha, Ibeta) and the harmonic current reference (Ialphanref, Ibetanref), is minimized,
**characterized in that**
the harmonic current error (Ialphanerr, Ibetanerr) is determined in a stationary alpha-beta frame.

2. Wind turbine according to claim 1,
wherein the current controller (30) comprises a first harmonic current controller (341) and at least a second harmonic current controller (342).

3. Wind turbine according to claim 2,
wherein the first harmonic current controller (341) uses a frequency which is six times a frequency of the fundamental current controller (31) and/or the second harmonic current controller (342) uses a frequency which is twelve times the frequency of the fundamental current controller (31).

4. Wind turbine according to one of the preceding claims,
wherein the harmonic current controller (341) comprises a plurality of filters for filtering the harmonic current error (Ialphanerr, Ibetanerr).

5. Wind turbine according to one of the preceding claims,
wherein the harmonic current controller (341) comprises regulators.

6. Wind turbine according to one of the preceding claims,
wherein input signals for the harmonic current reference calculation unit (321) comprise generator torque and/or generator speed (A) and/or generator current signals (Ia, Ib, Ic) and/or generator power.

7. Wind turbine according to one of the preceding claims,
wherein the grid-side converter unit (123) is configured for being connected with a transformer (13).

8. Wind turbine according to one of the preceding claims,
wherein the frequency converter (12) comprises a plurality of insulated-gate bipolar transistors.

## Patentansprüche

1. Windturbine, welche einen elektrischen Generator (11), einen Frequenzumrichter (12) und eine generatorseitige Umrichtersteuerung (20) umfasst,
- wobei der Frequenzumrichter (12) dafür ausgelegt ist, elektrische Leistung, welche von der Windturbine erzeugt wird, zwischen dem elektrischen Generator (11) und einem externen Stromnetz (14) über Schnittstellen zu übertragen,
- wobei der Frequenzumrichter (12) eine generatorseitige Umrichtereinheit (121), welche mit dem elektrischen Generator (11) gekoppelt ist, eine netzseitige Umrichtereinheit (123), welche mit dem externen Stromnetz (14) gekoppelt ist, und einen Gleichstromzwischenkreis (122), welcher die generatorseitige Umrichtereinheit (121) mit der netzseitigen Umrichtereinheit (123) verbindet, umfasst,
- wobei die generatorseitige Umrichtersteuerung (20) mit der generatorseitigen Umrichtereinheit (121) gekoppelt ist,
- wobei die generatorseitige Umrichtersteuerung (20) dafür ausgelegt ist, der generatorseitigen Umrichtereinheit (121) Umrichtersteuersignale (S) zuzuführen, um das Geräusch zu vermindern, welches von dem elektrischen Generator (11) erzeugt wird,
- wobei die generatorseitige Umrichtersteuerung (20) eine Stromsteuerung (30) umfasst,
- wobei die Stromsteuerung (30) umfasst:
a) eine Grundschwingungsstromsteuerung (31), die dafür ausgelegt ist, Grundspannungsbefehle (Vd1, Vq1) bereitzustellen,
b) wenigstens eine Oberwellenstromreferenzsignal-Berechnungseinheit (321) zum Berechnen wenigstens eines Oberwellenstrom-Referenzsignals (Ialphanref, Ibetanref) zum Vermindern des Geräuschs und der Schwingungen des elektrischen Generators (11),
c) wenigstens eine Oberwellenstromsteuerung (341), die dafür ausgelegt ist, das Oberwellenstrom-Referenzsignal (Ialphanref, Ibetanref) und Rückführ-Generatorstromsignale (Ia, Ib, Ic) von dem elektrischen Generator (11) zu verwenden, um Oberwellenspannungsbefehle (Vdnh, Vqnh) zu erhalten, und
d) Summierelemente (1, 2), die dafür ausgelegt sind, die Grundspannungsbefehle (Vd1, Vq1) und die Oberwellenspannungsbefehle (Vdnh, Vqnh) zu addieren, um die Umrichtersteuersignale (S) zu erhalten, und
- wobei die Stromsteuerung (30) derart ausgebildet ist, dass ein Oberwellenstromfehler (Ialphanerr, Ibetanerr), welcher durch die Differenz zwischen den Rückführ-Generatorstromsignalen (Ialpha, Ibeta) und dem Oberwellenstrom-Referenzsignal (Ialphanref, Ibetanref) definiert ist, minimiert wird,
**dadurch gekennzeichnet, dass**
der Oberwellenstromfehler (Ialphanerr, Ibetanerr) in einem stationären Alpha-Beta-Rahmen bestimmt wird.

2. Windturbine nach Anspruch 1,
wobei die Stromsteuerung (30) eine erste Oberwellenstromsteuerung (341) und wenigstens eine zweite Oberwellenstromsteuerung (342) umfasst.

3. Windturbine nach Anspruch 2,
wobei die erste Oberwellenstromsteuerung (341) eine Frequenz verwendet, welche gleich dem Sechsfachen einer Frequenz der Grundschwingungsstromsteuerung (31) ist, und/oder die zweite Oberwellenstromsteuerung (342) eine Frequenz verwendet, welche gleich dem Zwölffachen der Frequenz der Grundschwingungsstromsteuerung (31) ist.

4. Windturbine nach einem der vorhergehenden Ansprüche,
wobei die Oberwellenstromsteuerung (341) mehrere Filter zum Filtern des Oberwellenstromfehlers (Ialphanerr, Ibetanerr) umfasst.

5. Windturbine nach einem der vorhergehenden Ansprüche,
wobei die Oberwellenstromsteuerung (341) Regler umfasst.

6. Windturbine nach einem der vorhergehenden Ansprüche,
wobei Eingangssignale für die Oberwellenstromreferenzsignal-Berechnungseinheit (321) das Generatordrehmoment und/oder die Generatordrehzahl (A) und/oder Generatorstromsignale (Ia, Ib, Ic) und/oder die Generatorleistung umfassen.

7. Windturbine nach einem der vorhergehenden Ansprüche,
wobei die netzseitige Umrichtereinheit (123) dafür ausgelegt ist, mit einem Transformator (13) verbunden zu werden.

8. Windturbine nach einem der vorhergehenden Ansprüche,
wobei der Frequenzumrichter (12) mehrere Bipolartransistoren mit isolierter Gate-Elektrode umfasst.

## Revendications

1. Éolienne comprenant un générateur électrique (11), un convertisseur de fréquence (12) et un contrôleur (20) de convertisseur de côté générateur,
- dans laquelle le convertisseur de fréquence (12) est configuré pour interfacer une énergie électrique, qui est générée par l'éolienne, entre le générateur électrique (11) et un réseau électrique (14) externe,
- dans laquelle le convertisseur de fréquence (12) comprend une unité (121) de convertisseur de côté générateur, qui est couplée au générateur électrique (11), une unité (123) de convertisseur de côté réseau, qui est couplée au réseau électrique (14) externe, et une liaison (122) de courant continu, qui connecte l'unité (121) de convertisseur de côté générateur avec l'unité (123) de convertisseur de côté réseau,
- dans laquelle le contrôleur (20) de convertisseur de côté générateur est couplé à l'unité (121) de convertisseur de côté générateur,
- dans laquelle le contrôleur (20) de convertisseur de côté générateur est configuré pour fournir des signaux (S) de commande de convertisseur à l'unité (121) de convertisseur de côté générateur pour réduire un bruit acoustique, qui est généré par le générateur électrique (11),
- dans laquelle le contrôleur (20) de convertisseur de côté générateur comprend un contrôleur (30) de courant,
- dans laquelle le contrôleur (30) de courant comprend
a) un contrôleur (31) de courant fondamental configuré pour fournir des commandes (Vd1, Vq1) de tension fondamentale,
b) au moins une unité (321) de calcul de référence de courant harmonique pour calculer au moins une référence (Ialphanref, Ibetanref) de courant harmonique pour réduire un bruit et une vibration du générateur électrique (11),
c) au moins un contrôleur (341) de courant harmonique configuré pour utiliser la référence (Ialphanref, Ibetanref) de courant harmonique et des signaux (Ia, Ib, Ic) de courant de générateur de retour du générateur électrique (11) pour obtenir des commandes (Vdnh, Vqnh) de tension harmonique, et
d) des éléments (1, 2) de sommation configurés pour additionner les commandes (Vd1, Vq1) de tension fondamentale et les commandes (Vdnh, Vqnh) de tension harmonique pour obtenir les signaux (S) de commande de convertisseur, et
- dans laquelle le contrôleur (30) de courant est configuré de telle manière qu'une erreur (Ialphanerr, Ibetanerr) de courant harmonique, qui est définie par la différence entre les signaux (Ialpha, Ibeta) de courant de générateur de retour et la référence (Ialphanref, Ibetanref) de courant harmonique, est minimisée,
**caractérisée en ce que**
l'erreur (Ialphanerr, Ibetanerr) de courant harmonique est déterminée dans une trame alpha-bêta stationnaire.

2. Éolienne selon la revendication 1,
dans laquelle le contrôleur (30) de courant comprend un premier contrôleur (341) de courant harmonique et au moins un deuxième contrôleur (342) de courant harmonique.

3. Éolienne selon la revendication 2,
dans laquelle le premier contrôleur (341) de courant harmonique utilise une fréquence qui est six fois une fréquence du contrôleur (31) de courant fondamental et/ou le deuxième contrôleur (342) de courant harmonique utilise une fréquence qui est douze fois la fréquence du contrôleur (31) de courant fondamental.

4. Éolienne selon l'une des revendications précédentes,
dans laquelle le contrôleur (341) de courant harmonique comprend une pluralité de filtres pour filtrer l'erreur (Ialphanerr, Ibetanerr) de courant harmonique.

5. Éolienne selon l'une des revendications précédentes,
dans laquelle le contrôleur (341) de courant harmonique comprend des régulateurs.

6. Éolienne selon l'une des revendications précédentes,
dans laquelle des signaux d'entrée pour l'unité (321) de calcul de référence de courant harmonique comprennent un couple de générateur et/ou une vitesse de générateur (A) et/ou des signaux (Ia, Ib, Ic) de courant de générateur et/ou une puissance de générateur.

7. Éolienne selon l'une des revendications précédentes,
dans laquelle l'unité (123) de convertisseur de côté réseau est configurée pour être connectée avec un transformateur (13).

8. Éolienne selon l'une des revendications précédentes,
dans laquelle le convertisseur de fréquence (12) comprend une pluralité de transistors bipolaires à grille isolée.
